(19) Europäisches Patentamt
European Patent Office
Office européen des brevets

(11) **EP 2 472 979 A2**

(12) **EUROPEAN PATENT APPLICATION**
published in accordance with Art. 153(4) EPC

(43) Date of publication:
**04.07.2012 Bulletin 2012/27**

(51) Int Cl.:
**H04W 72/08** (2009.01)   **H04W 24/10** (2009.01)

(21) Application number: **10812191.4**

(22) Date of filing: **18.08.2010**

(86) International application number:
**PCT/KR2010/005463**

(87) International publication number:
**WO 2011/025177 (03.03.2011 Gazette 2011/09)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **26.08.2009  KR 20090079489**

(71) Applicant: **Pantech Co., Ltd.**
**Seoul 121-270 (KR)**

(72) Inventors:
• **PARK, Kyoungmin**
**Goyang-si**
**Gyeonggi-do 441-440 (KR)**
• **SUH, Sungjin**
**Seoul 137-070 (KR)**

(74) Representative: **Herzog, Markus et al**
**Weickmann & Weickmann**
**Patentanwälte**
**Postfach 86 08 20**
**81635 München (DE)**

(54) **METHOD AND APPARATUS FOR TRANSMITTING DOWNLINK CHANNEL INFORMATION USING AN UPLINK BROADBAND MEASUREMENT SIGNAL IN A WIRELESS COMMUNICATION SYSTEM, AND METHOD AND APPARATUS FOR ACQUIRING DOWNLINK CHANNEL INFORMATION USING SAME**

(57)    The present disclosure relates to a method and apparatus for transmitting downlink channel information using an uplink broadband measurement signal in a wireless communication system, as well as to a method and apparatus for acquiring downlink channel information using same.

*FIG.2*

## Description

Technical Field

The present invention relates to a wireless communication system, and more particularly to a method and an apparatus for transmitting downlink channel information using an uplink broadband measurement signal in a wireless communication system, and a method and an apparatus for acquiring downlink channel information using the same.

Background Art

With the development of a communication system, consumers such as enterprises and individuals have used highly various wireless terminals.

Accordingly, communication service providers continuously attempt to create a new communication service market for the wireless terminals and provide a service having a low price but reliability to expand a conventional communication service market.

In a wireless communication system, it is basically required to estimate a state of a downlink channel in a downlink environment where a base station transmits data to a user equipment.

Meanwhile, conventional systems use a codebook in order to transmit downlink channel information with small feedback overheads. More specifically, several representative types of channels are selected or a precoder, which is suitable for the selected channel type, is selected, and a codeword, which expresses the selected channel type or the precoder to be used, is formed. And then, a codebook including codewords is designed. A UE estimates a downlink channel, searches a codebook, and then extracts a most suitable codeword. Further, the UE transmits the extracted codeword together with a control signal or an information signal transmitted to an uplink. That is, in a case of a closed loop transmission scheme, a receiving side indicates a particular precoding vector or codeword among a predefined codebook according to a reception signal and accordingly feeds back channel information. A transmitting side transmits a signal by using such a feedback signal.

In a conventional art, there is one base station, which can receive an information signal or a control signal transmitted from a user equipment, so that it is not suitable for a Coordinated Multi-Point (CoMP) transmission/reception system in which a user equipment communicates with a plurality of base stations, which will be described later. Further, it expresses channel information by using the large number of bits to transmit exact downlink channel information to a base station, which requires large feedback overheads. In order to reduce feedback overheads, it is necessary to control a transmission such that the downlink channel information is transmitted to the base station as few times as possible but there is a disadvantage of requiring a separate transmission control overhead.

Further, a method is needed, which can express channel information while using a smaller number of resources.

Particularly, in a recently researched communication standard such as an LTE-A (Long Term Evolution-Advanced), a MU-MIMO scheme, which simultaneously transmits information to a plurality of users by using a MIMO in a downlink, is used. Accordingly, in order to effectively control Multiple Access Interference (MAI) due to multiple accesses, the base station requires exact information on a channel through which a signal is transmitted to each user equipment.

Disclosure

Technical Problem

The present disclosure provides a method and an apparatus in which a user equipment transmits downlink channel information to two or more base stations by using an uplink broadband measurement signal in a wireless communication system.

Technical solution

In order to accomplish the above-mentioned objects, in accordance with an aspect of the present invention, there is provided a method of transmitting downlink channel information by using an uplink broadband measurement signal by a UE, the method including mapping downlink channel information acquired from two or more base stations into an uplink broadband measurement signal for each of the two more base stations and generating a synthesized signal; and transmitting the synthesized signal to the two or more base stations.

In accordance with another aspect of the present invention, there is provided An apparatus for transmitting downlink channel information by using an uplink broadband measurement signal, the apparatus including a channel estimator for estimating a downlink channel from a signal received from each base station; a downlink channel information determiner for determining downlink channel information suitable for an estimated downlink channel state; an uplink broadband measurement signal generator for generating an SRS which is an uplink broadband measurement signal to be transmitted to two or more base stations; a signal synthesizer for mapping the downlink channel information into the uplink broadband measurement signal and generating a synthesized signal; and a signal transmitter for simultaneously transmitting the synthesized signal to the two or more base stations.

In accordance with another aspect of the present invention, there is provided a method of acquiring downlink channel information by a base station, the method including mapping downlink channel information into an uplink broadband measurement signal and receiving a synthesized signal from a user equipment; and acquiring information on a downlink channel state from the synthesized signal.

In accordance with another aspect of the present invention, there is provided a base station apparatus for acquiring downlink channel information from a synthesized signal of an uplink broadband measurement signal and the downlink channel information, the base station apparatus grasping a downlink channel state by mapping the downlink channel information into the uplink broadband measurement signal, receiving the synthesized signal from a user equipment, and acquiring information on the downlink channel state from the synthesized signal.

Brief Description of the Drawings

The foregoing and other objects, features and advantages of the present invention will become more apparent from the following detailed description when taken in conjunction with the accompanying drawings in which:

FIG. 1 is a block diagram of a wireless communication system to which embodiments of the present invention are applied;

FIG. 2 is a block diagram of a downlink channel information transmitting apparatus for each function using an uplink broadband measurement signal according to an embodiment of the present invention;

FIG. 3 is a flowchart of a downlink channel information transmitting method using an uplink broadband measurement signal according to an embodiment of the present invention;

FIG. 4 is a view illustrating a method of allocating a synthesized signal or an SRS resource for each BS according to an embodiment of the present invention; and

FIG. 5 is a view illustrating a method of allocating a synthesized signal or an SRS resource for each BS according to another embodiment of the present invention.

Best Mode

Mode for Invention

Hereinafter, exemplary embodiments of the present invention will be described in detail with reference to the accompanying drawings. It should be noted that in assigning reference numerals to elements in the drawings, the same elements will be designated by the same reference numerals although they are shown in different drawings. Further, in the following description of the present invention, a detailed description of known functions and configurations incorporated herein will be omitted when it may make the subject matter of the present invention rather unclear.

In addition, terms, such as first, second, A, B, (a), (b) or the like may be used herein when describing components of the present invention. Each of these terminologies is not used to define an essence, order or sequence of a corresponding component but used merely to distinguish the corresponding component from other component(s). It should be understood that if it is described in the specification that one component is "connected," "coupled" or "joined" to another component, a third component may be "connected," "coupled," and "joined" between the first and second components, although the first component may be directly connected, coupled or joined to the second component.

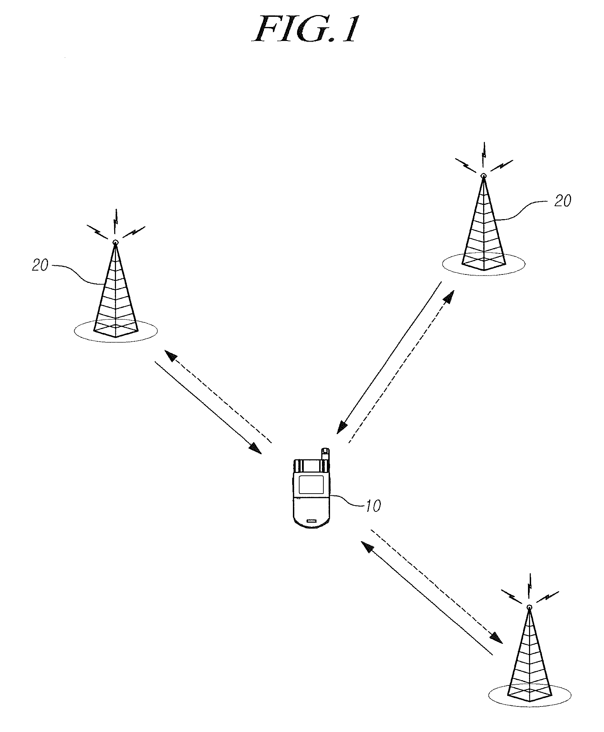

FIG. 1 is a block diagram of a wireless communication system to which embodiments of the present invention are applied.

A wireless communication system is widely arranged to provide various communication services such as voice and packet data.

Referring to FIG. 1, in a wireless communication system operated with a coordinated Multi-Point (hereinafter, referred to as a "CoMP") transmission/reception system, a User Equipment (UE) 10 simultaneously receives information from one or a plurality of Base Stations (BSs) 20 and the UE should transmit information on a downlink channel to one or more BSs for a smooth information transmission.

The UE 10 in the present disclosure is a generic concept indicating a user terminal in wireless communication, and should be interpreted as a concept including all of a MS (Mobile Station), a UT (User Terminal), a SS (Subscriber Station), and a wireless device in a GSM as well as a UE (User Equipment) in a WCDMA, a LTE, and an HSPA.

The BS 20 or a cell in the present disclosure refers to a fixed station communicating with the UE 10, and may be referred to as other terms such as a Node-B, an eNB (evolved Node-B), a BTS (Base Transceiver System), an access point, and a relay node.

That is, in the present disclosure, the BS 20 or a cell should be interpreted as a generic concept indicating some areas covered by a BSC (Base Station Controller) in a CDMA and a Node-B in a WCDMA, and is a concept including various coverage areas such as communication ranges of a mega cell, a macro cell, a micro cell, a pico cell, a femto cell, and a relay node.

The UE 10 and the BS 20 in the present disclosure are used as a generic meaning, which are transmitting/receiving subjects used to implement a technology or a technological idea described in the present disclosure, and they are not limited by a specifically designated term or word.

A multiple access scheme applied to a wireless communication system has no limitation, and the wireless communication system can use various multiple access schemes such as a CDMA (Code Division Multiple Access), a TDMA (Time Division Multiple Access), an FDMA (Frequency Division Multiple Access), an OFDMA (Orthogonal Frequency Division Multiple Access), an OFDM-FDMA, an OFDM-TDMA, and an OFDM-CDMA.

A TDD (Time Division Duplex) scheme corresponding to a transmission using different times may be used for an uplink transmission and a downlink transmission, or an FDD (Frequency Division Duplex) scheme corresponding to a transmission using different frequencies may be used for an uplink transmission and a downlink transmission.

An embodiment of the present invention may be applied to resource allocations of an asynchronous wireless communication field evolving into an LTE (Long Term Evolution) and an LTE-advanced via a GSM, a WCDMA, and an HSPA, and a synchronous wireless communication field evolving into a CDMA, a CDMA-2000, and a UMB. The present invention should not be interpreted as a limited and restricted concept to a specific wireless communication field, but should be interpreted as a concept including all technical fields, to which ideas of the present invention can be applied.

The CoMP system has highly larger feedback overheads to transmit downlink channel information and has a disadvantage of greatly increasing signaling overheads because channel information should be simultaneously transmitted to different BSs in comparison with a conventional wireless communication system in which one UE transmits downlink channel information to one BS. In order to overcome the disadvantage, a method of estimating downlink channel information from an uplink reference signal is proposed. However, because of the difference between an uplink channel and a downlink channel, the method cannot transmit exact information on the downlink channel to the BS. Therefore, in order to compensate for the problem, an embodiment of the present invention proposes a method of adding the downlink channel information to the uplink reference signal or synthesizing them and then transmitting it.

According to an embodiment of the present invention, an example of the uplink broadband measurement signal or the uplink reference signal to which the downlink channel information is added or with which the downlink channel information is synthesized includes a Sounding Reference Signal (SRS) used in an LTE (Long Term Evolution) and an LTE-Advanced and the SRS has the same function as a pilot channel for the uplink channel.

Hereinafter, the following description will be discussed based on a sounding reference signal (hereinafter, referred to as a "SRS") which is an example of the uplink broadband measurement signal, but the present invention is not limited to the SRS and the SRS should be interpreted as an uplink broadband measurement signal having a wide meaning.

The SRS should be able to transmit uplink channel information on an entire band including a band, which has a possibility to be used by a user, as well as a band, which is to be used by each user.

Next, a method of using the SRS, which is an example of the uplink reference signal, and a method of estimating or acquiring downlink channel information through the SRS will be described.

The BS receives an already known SRS from a particular UE and then compares a reception signal R with the already known SRS. As a result, the BS grasps a degree of fading or attenuation and a degree of noise in the uplink channel and thus acquires uplink channel information. For example, when the SRS is "1111" and the reception signal R is 0.85, 0.95, 0.75, 0.65, R/SRS = 0.85, 0.95, 0.75, 0.65. At this time, a value of 0.8 which is an average of 4 values is determined as an attenuation rate and the difference between the attenuation and an average of each channel region may be determined as the noise.

Further, when an interval between uplink and downlink bands and an interval between uplink and downlink transmission times are not large, an uplink channel and a downlink channel share some characteristics, and thus the BS can estimate the downlink channel by using a received SRS. That is, for example, the BS obtains an uplink channel matrix by using an SRS transmitted from the UE and then can estimate the downlink channel by taking a transpose matrix of the uplink channel matrix. However, the downlink channel information obtained in the above manner has low accuracy. That is, since the BS requires exact information on the downlink channel in order to support a high speed information transmission, the above manner to estimate the downlink channel information through the SRS measurement is not suitable for the high speed information transmission. Further, when the downlink channel is quickly changed, the downlink channel information should be continuously transmitted to the BS. However, the conventional manner cannot quickly track the change of the downlink channel.

Meanwhile, in the CoMP system, when a plurality of BSs attempt to provide a coordinated transmission/reception service to one user, the BSs provide the service by allocating the same or different frequency resources in the same time zone.

In the CoMP transmission/reception system, when the BS and the UE transmit/receive coordinated data, the BS and the UE receive an allocation of the same frequency resources in the same time zone. That is, a plurality of BSs selected as coordinated BSs transmit/receive data to/from one user in the same time zone by using the same or different frequency resources. Accordingly, the BS selected as the coordinated BS should be a BS having an excellent channel capability for a used frequency band for a corresponding user.

The user analyzes reference signals transmitted from respective BSs, grasps each BS and a downlink channel condition for each antenna of each BS, and directly or indirectly feeds back the grasped information to a corresponding BS.

With an introduction of such a coordinated multi-antenna transmission/reception system, it is required for one user to transmit the same reference signal to adjacent cells, that is, a plurality of BSs at the same time. However, according to the conventional arts, the UE can transmit information to only one BS at the same time. That is, there are a plurality of BSs, which require downlink channel information, while there is one BS, which can receive an information signal or a control signal transmitted from a UE. Accordingly, when the downlink channel information is transmitted together with the control signal or information signal, the downlink channel information cannot be transmitted to a plurality of BSs at the same time. In order to solve the above problem, a technique for transmitting the downlink channel information by using a signal other than the control signal or the information signal is needed.

According to the present disclosure, when the UE transmits downlink channel information to two or more BSs, the UE acquires downlink channel information (CSI) of each BS, maps the acquired downlink channel information into an uplink broadband measurement signal to generate a synthesized signal, and transmits the synthesized signal to the two or more BSs at the same time.

At this time, since the synthesized signal into which the SRS and the downlink channel information are mapped should be transmitted to two or more BSs, a technology is also proposed, which can prevent interference by allocating the generated synthesized signal to a time-frequency domain such that the synthesized signals is not overlapped for each BS.

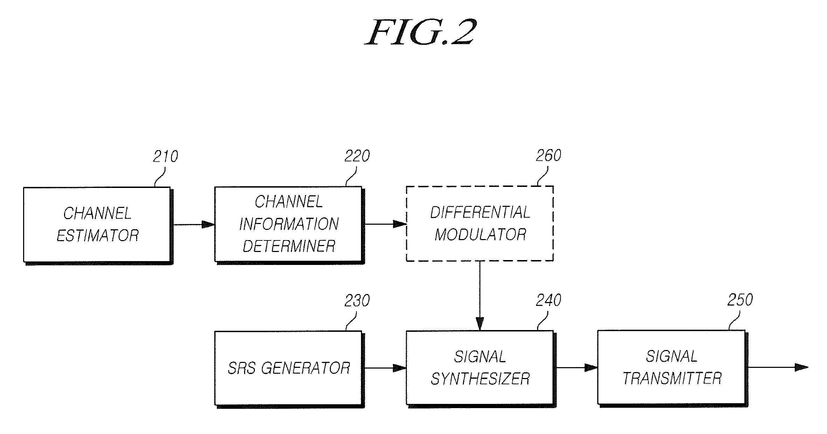

FIG. 2 is a block diagram of a downlink channel information transmitting apparatus for each function using an uplink broadband measurement signal according to an embodiment of the present invention.

It is preferable that the downlink channel information transmitting apparatus according to an embodiment of the present invention is implemented in a terminal, but the present invention is not limited thereto.

The downlink channel information transmitting apparatus using an SRS according to an embodiment of the present invention may include a channel estimator 210 for estimating a downlink channel from a signal received from each BS, a downlink channel information determiner 220 for determining downlink channel information suitable for a state of the estimated downlink channel, an SRS generator 230 for generating an SRS, which is an uplink broadband measurement signal to be transmitted to two or more BSs, a signal synthesizer 240 for mapping the downlink channel information into the uplink broadband measurement signal to generate a synthesized signal, and a signal transmitter 250 for simultaneously transmitting the synthesized signal to the two or more BSs as shown in FIG. 2.

The channel estimator 210 can estimate a downlink channel from a pilot signal received from each BS, but the present invention is not limited thereto and can employ any method by which a state of a downlink channel between each BS and a UE can be identified.

The channel information determiner 220 determines downlink channel information suitable for a state of the estimated downlink channel. As an embodiment, a method of determining a codeword, which best expresses a current downlink channel state, among a codebook including a plurality of codewords ($CW_i$) as downlink channel information may be used, but the present invention is not limited thereto.

The SRS generator 230 performs functions of generating an SRS, which the BS already knows, and determining a time-frequency band to transmit the generated SRS. For example, the SRS to be transmitted may be a digital bit signal such as "1111".

The signal synthesizer 240 synthesizes the generated SRS and downlink channel information, for example, codewords. In the synthesization, an addition such as modular-2 operation is possible, but the present invention is not limited thereto and can use operations such as a multiplication and a subtraction as long as it is commonly applied to the BS and the UE.

Further, an embodiment of the present invention may further include a differential modulator 260 for performing a differential modulation of a channel information value determined after the channel information determiner 220 in order to reduce an amount of transmitted information. In this case, a differentially modulated downlink channel information value is input to the signal synthesizer 240 and the input value may be synthesized with an SRS value input from the SRS generator 230.

The synthesized signal can be simultaneously transmitted to two or more BSs through the signal transmitter 250.

It is preferable that the downlink channel information and the uplink broadband measurement signal (SRS) are digital bit signals, but the present invention is not limited thereto.

Meanwhile, the BS or the cell having received the synthesized signal of the SRS and the downlink channel information reconstructs the downlink channel information from the synthesized signal and the already known SRS to acquire desired downlink channel information, and a detailed example will be separately discussed in the following description.

Downlink channel information used herein may be Channel State Information (CSI), but the present invention is not limited thereto. The channel state information refers to information on a current value of H, and H is a mathematical value indicating a signal channel. H is one part included in a signal model in wireless communication and a complete equation is as defined by equation (1) below.

$$R = H \bullet X + N \quad \text{.........................................................} (1)$$

In equation (1), R denotes a reception signal, X denotes a transmitted signal, and N denotes noise. H denotes channel state information and is not constant. Accordingly, a system should generally acquire information on H in order to recognize which signal is transmitted from a transmitting side.

In the above mentioned embodiment of the present invention, the UE synthesizes a codeword, which is downlink channel information, with an SRS and transmits it to two or more BSs at the same time. The BS reconstructs the SRS and the codeword from a synthesized signal, and simultaneously grasps an uplink channel state by using the SRS and a downlink channel state from the codeword.

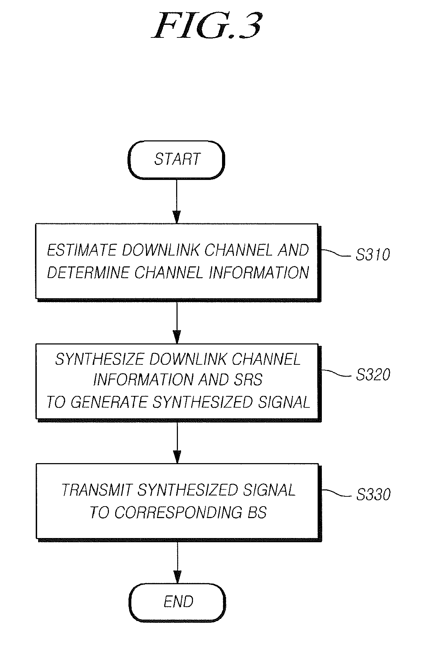

FIG. 3 is a flowchart of a downlink channel information transmitting method using an uplink broadband measurement signal according to an embodiment of the present invention.

The UE estimates a downlink channel by using a pilot signal from each of two or more BSs and then determines downlink channel information (CSI) of each BS in step S310.

At this time, the downlink channel information may be one codeword selected from a codebook.

Next, the selected downlink channel information is synthesized with an SRS for each BS or mapped into the SRS and a synthesized signal is generated in step S320. And then, the generated synthesized signal is transmitted to a corresponding BS in step S330.

At this time, in order to reduce an amount of transmitted information, a channel information value, which is determined after a codeword is determined, may be differentially modulated.

An example of a process of determining the downlink channel information and synthesizing the downlink channel information with the SRS will be discussed in the following description.

It is assumed that $CW_{11} = (1011)$, which is one of 16 codewords $CW_0$ to $CW_{15}$, is determined as a codeword suitable for a downlink channel state of a BS A from a pilot signal received from the BS A. In this case, (10010) is generated by differentially modulating (1011). The differential modulation employs a modulation method of determining "1" when a value is changed from a previous value and determining "0" when a value is not changed from a previous value (It is assumed that an initial value of the differential modulation is "1").

Next, $CW_{11}$ is synthesized with the already determined SRS signal, for example, "11111". At this time, as a synthesizing method, a modular-2 operation, which is one of the simplest operations, is used and the synthesized signal Xsyn is determined as "01101" defined by equation (2) below.

$$Xsyn = SRS \ mod2 \ CW_{11} = (11111) mod2 (10010) = (01101)$$

$$\text{..........................} (2)$$

The BS transmits Xsyn=(01101), which is a synthesized signal of codeword $CW_{11}$ corresponding to the downlink channel information and the SRS, to the BS A.

Of course, for another BS, a codeword suitable for a downlink channel state of a corresponding BS is synthesized with an SRS and a synthesized signal is transmitted to the corresponding BS in the same way.

At this time, in general, a length of a reference signal such as the SRS is longer than a length of the codeword. In this case, it is possible to maintain lengths of both signals to be the same through a codeword repetition and to use a method of controlling a length of the reference signal by puncturing a part of the reference signal as necessary. Further, it is possible to use a method of synthesizing or combining the codeword with a part of the reference signal.

The synthesized signal transmitted as described above is received by the BS A as a reception signal R, and the BS A reconstructs a downlink channel information reception signal r from the reception signal R by using the already known SRS and the synthesizing method performed in the transmitting UE.

For example, when the transmitted synthesized signal Xsyn=(01101) is received as the reception signal R corresponding to (-0.1, 0.8, 0.9, 0.1, 0.7) due to effects of the attenuation and the noise in the transmission process, the downlink channel information reception signal corresponding to (-0.1, 0.8, 0.9, 0.1, 0.7) is reconstructed by using the synthesizing method performed by the UE, that is, by using a modular-2 operation as shown in equation (3) below because the SRS is already known as (11111).

$$Xsyn = SRS \ mod2 \ R = (11111) mod2 (-0.1, 0.8, 0.9, 0.2, 0.7) =$$
$$(-0.1, 0.8, 0.9, 0.1, 0.7) \quad \text{............................................} (3)$$

Next, equation (4) below is used to find a codeword, which is downlink channel information transmitted by the UE, from the reconstructed downlink channel information reception signal r.

$$CW_{DM} = min|r - CW_{i \ DM}|$$
$$\text{.............................................} \quad (4)$$

In equation (4), $CW_{i \ DM}$ denotes a differential modulation value of each codeword $CW_i$ and a differential modulation value of a codeword, which has the smallest difference value from the downlink channel information reception signal r, is determined as $CW_{DM}$.

According to the above description, the differential modulation value of a codeword, which has the smallest difference value from the downlink channel information reception signal r, is determined as (10010) and accordingly it is identified that the codeword, which is the downlink channel information transmitted by the UE, is $CW_{11} = (1011)$.

Accordingly, the BS A recognizes the codeword, which is the downlink channel information transmitted by the UE, and acquires the downlink channel information.

Of course, it is possible to acquire an uplink channel environment by using the downlink channel information reception signal r and the already known SRS through the conventional method in this process. That is, the BS A recognizes that the transmitted synthesized signal is (01101) and R/transmitted signal is (-0.1, 0.8, 0.9, 0.1, 0.7) by using the reception signal R through the same method as the conventional art. At this time, a value of 0.8, which is an average of 5 values, is determined as the attenuation rate and the difference between the attenuation rate and an average of each channel region may be determined as the noise.

Accordingly, the BS A can perform an uplink channel estimation, which corresponds to a basic function of the SRS, and also acquire the downlink channel information.

The above description has been discussed for only illustrative purposes, and the present invention may apply other methods such as a method of synthesizing the downlink channel information and the SRS, an operation method, and a modulation method as long as they include the idea of the present invention.

Further, as described above, since the UE should transmit the synthesized signal into which the SRS and the downlink channel information are mapped to two or more BSs at the same time, a method of preventing interference is required by allocating such that the generated synthesized signal is not overlapped for each BS. The method will be discussed in the following description.

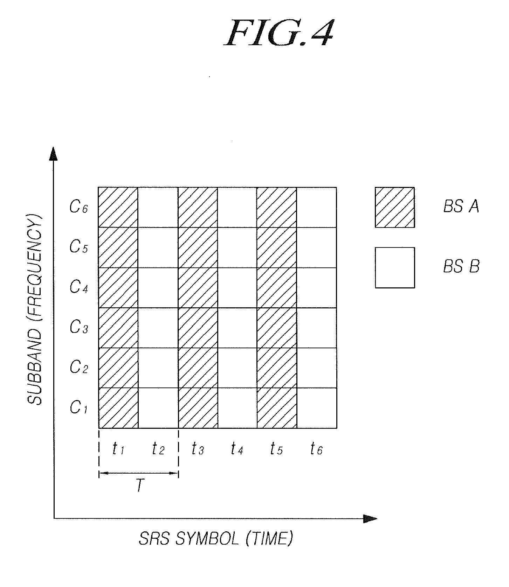

In order to satisfy the requirements, SRS resources or synthesized signals are allocated to several BSs by the UE in an embodiment of the present invention as shown in FIG. 4 and the synthesized signal or the SRS is transmitted to another BS (or cell) in another symbol or another time zone.

That is, as shown in FIG. 2, the synthesized signal or the SRS is transmitted over entire bands for a detailed time interval (time slot) t1 in the BS A (or cell A) and the synthesized signal or the SRS is transmitted in another BS (or cell B) for t2. Further, the synthesized signal or the SRS is transmitted in the BS A for t3 again. As a result, a synthesized signal or an SRS transmission region for each BS is allocated alternately with each time slot. In other words, a synthesized signal or an SRS transmission resource corresponding to each BS is allocated to different time domains.

Through the method of allocating a synthesized signal or an SRS transmission resource, it is possible to transmit the synthesized signal or the SRS without interference in a transmission to two or more BSs from one UE while satisfying requirements to transmit the synthesized signal or the SRS for each BS over the entire bands.

In the above described embodiment of the present invention, the UE allocates synthesized signals or SRS resources to be transmitted to several BSs and a time division method of transmitting a synthesized signal or an SRS to another BS (or cell) in another symbol or another time, that is, a method of using different time domains for each BS over entire band resources is employed, but the present invention is not limited thereto. Further, the present invention can use a semi-random method of allocating such that time-frequency resources are not overlapped for each BS according to a regular rule as described in another embodiment below.

According to another embodiment of the present invention, when the UE allocates synthesized signals or sounding reference signals to be transmitted to several BSs in a time-frequency domain over entire bands including a plurality of subbands for a finite time interval T including a plurality of detailed time bands (time slot t), the synthesized signal or the SRS resources are allocated for each detailed time band or each subband for each BS or each cell according to a regular rule. Further, a semi-random allocation method, which enables the synthesized signal or the SRS to be received in the entire bands for the finite time interval T while not overlapping the synthesized signal or the SRS transmission resources of each BS or each cell with those of other BSs, is illustrated.

Here, the finite time interval T refers to an entire period on which each of a plurality of BSs receiving the synthesized signal or the SRS from the UE can receive/transmit the SRS in the entire bands. The finite time interval T may be variably determined by the number of BSs or the number of UEs included in the BSs and the detailed time band or the time slot may have a size of one synthesized signal or a size of one SRS symbol, but the present invention is not limited thereto.

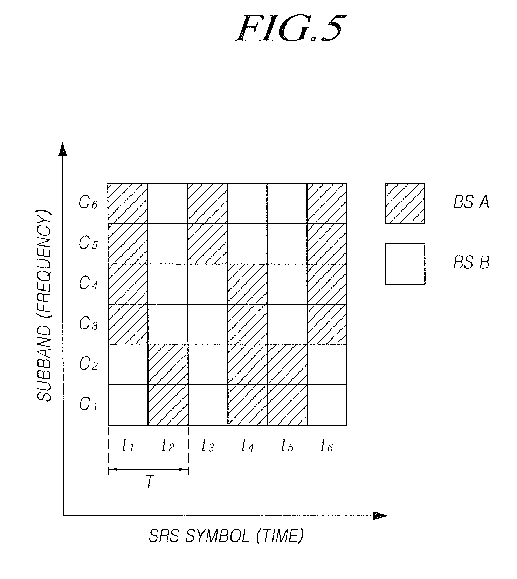

That is, as shown in FIG. 5, some subbands are allocated to respective BS A and BS B such that the subbands are not overlapped for each of detailed time bands (t1 to t6) (shaded parts are regions allocated to the BS A and not shaded parts are regions allocated to the BS B) unlike the embodiment of FIG. 4 in which the synthesized signal or the SRS is transmitted to one cell over the entire bands for the detailed time band t1, but each cell receives the synthesized signal or the SRS in all subbands (bands) when an overall finite time interval T is considered.

An exemplary example used according to a regular rule in the embodiment of the present invention allocates resources such that synthesized signals or SRSs are transmitted in all time slots or all detailed time bands for each BS. That is, when the UE transmits the synthesized signal or the SRS to two or more BSs, it is preferable to allocate the signal as shown in FIG. 5, but, when the UE transmits the synthesized signal or the SRS to three BSs, it is preferable to allocate the signal by setting T=3t and each BS of the three BSs receives the synthesized signal or the SRS in one or more subbands in all time slots.

If the synthesized signal or the SRS resource is allocated to be transmitted, each cell can receive the synthesized signal or the SRS in all subbands (bands) without interference with each other when the overall finite time interval T is considered.

Particularly, the time division method of the former embodiment satisfies requirements to transmit the synthesized signal or the SRS over the entire bands for each BS but the synthesized signal or the SRS is not received in every regular time interval or time slot (T), so that a separation between time slots is further increased as the number of BSs or points, which should transmit a signal at the same time, is increased and thus there is a disadvantage of decreasing a period for acquiring downlink channel information.

However, when the semi-random method of the latter embodiment in which each of a plurality of BSs receives the synthesized signal or the SRS in one or more subbands in all time slots is used, the synthesized signal or the SRS is received in every time slot, so that there is an advantage of enabling exact downlink channel information to be frequently obtained.

Meanwhile, as described above, a synthesized signal or an SRS transmission period or a transmission method should be considered regardless of a synthesized signal or an SRS resource allocation (design). In the following description, factors, which should be considered when selecting the synthesized signal or the SRS transmission period or the transmission method, will be discussed.

In general, a speed of a change in a downlink channel is estimated and reported by the UE.

However, the present invention omits the above process and employs a construction of estimating a speed of a change in a channel from a synthesized signal or an SRS received by the BS and determining a synthesized signal or an SRS transmission period, which can sufficiently measure a change in the downlink channel.

The SRS transmission period should be determined such that a downlink channel can be estimated by using an SRS transmitted from one or more UEs by each BS. An SRS is basically a signal used to estimate uplink channel information, so frequency to transmit the SRS is determined by a speed of a change in the uplink channel. In general, an uplink and a downlink have different channel characteristics, but there is a high probability in which speeds of changes in both channels are the same because the speeds of the changes in both channels are determined by a moving speed of the UE. Accordingly, frequency in which uplink channel information should be transmitted to the BS may be the same as frequency in which downlink channel information should be transmitted to the BS.

Further, the present invention proposes the method of transmitting the SRS on a frequent period and employs a construction of omitting a conventional process of estimating a speed of a change in a channel by the UE to report (feedback) the estimated speed to the BS and transmitting the SRS whenever uplink channel information is required without a separate transmission control, so that the downlink channel information is sufficiently frequently acquired.

However, when the speed of the change in the channel is estimated from the received SRS by the BS and the SRS transmission period is determined, it is possible to use a method considering both the speed of the change in the uplink channel and the speed of the change in the downlink channel.

Although the above description has discussed the method of allocating and reallocating the SRS transmission regions such that the SRS transmission regions are not overlapped for each BS and/or each UE and the downlink channel can be estimated from the SRS after dividing the SRS transmission regions based on a time (symbol or subframe) and a frequency (subband), the present invention is not limited thereto and may be implemented by other methods.

However, according to the technical idea of the present invention, the present invention is not limited to the method of allocating and reallocating the SRS transmission regions such that the SRS transmission regions are not overlapped for each BS and/or each UE and the downlink channel can be estimated from the SRS after dividing the SRS transmission regions based on a time (symbol or subframe) and a frequency (subband). A method of distinguishing SRSs of respective BSs and UEs can be employed by using various codes while all UEs or BSs use all SRS transmission regions.

In other words, the method of transmitting the sound reference signal to two or more BSs from the UE can employ a construction of generating the sounding reference signals such that the sounding reference signals are not overlapped for each BS and allocating the sounding reference signals to a time-frequency domain. The sounding reference signals are allocated to times, in which the downlink channel can be estimated from the sounding reference signals, and transmitted.

For example, the present invention may be implemented such that a band used by each cell is determined by a sequence such as a Zadoff sequence in order to enable all cells to use an entire band and other subframes to receive the SRS.

That is, 1) a hierarchical structure is used to enable each cell to receive an allocation of the entire band within a finite time interval T, 2) a band assignment between cells to be performed, and 3) a band for an SRS transmission between UEs to be allocated within each cell.

Among them, 1) may be implemented by allocating a band for an SRS to each cell in the same way as the method of allocating a band for an SRS to each UE.

Next, the band allocation for the SRS between UEs may be implemented in such a manner that 2-1) each UE transmits the SRS over all bands within a regular section T through the same hopping and different initial offsets of all UEs or may be implemented by using 2-2) the same method as the method of allocating the SRS to each UE in the conventional system.

CROSS-REFERENCE TO RELATED APPLICATION

This application claims priority from and the benefit under 35 U.S.C. §119(a) of Korean Patent Application No. 10-2009-0079489, filed on August 26, 2009, which is hereby incorporated by reference for all purposes as if fully set forth herein. In addition, this application claims priority in countries, other than the U.S., with the same reason based on the Korean Patent Application, which is hereby incorporated by reference for all purposes as if fully set forth herein.

**Claims**

1. A method of transmitting downlink channel information by using an uplink broadband measurement signal by a UE, the method comprising:

   mapping downlink channel information acquired from two or more base stations into an uplink broadband measurement signal for each of the two more base stations and generating a synthesized signal; and
   transmitting the synthesized signal to the two or more base stations.

2. The method as claimed in claim 1, wherein the downlink channel information is a codeword of a precoding codebook.

3. The method as claimed in claim 1, further comprising differentially modulating the downlink channel information before generating of the synthesized signal.

4. The method as claimed in claim 1, wherein, when the synthesized signal is transmitted to the two or more base stations, the generated synthesized signal is allocated to a time-frequency domain such that the synthesized signal is not overlapped for each base station and interference is not generated.

5. An apparatus for transmitting downlink channel information by using an uplink broadband measurement signal, the apparatus comprising:

   a channel estimator for estimating a downlink channel from a signal received from each base station;
   a downlink channel information determiner for determining downlink channel information suitable for an estimated downlink channel state;
an uplink broadband measurement signal generator for generating an SRS which is an uplink broadband measurement signal to be transmitted to two or more base stations;
a signal synthesizer for mapping the downlink channel information into the uplink broadband measurement signal and generating a synthesized signal; and
a signal transmitter for simultaneously transmitting the synthesized signal to the two or more base stations.

6. A method of acquiring downlink channel information by a base station, the method comprising:

mapping downlink channel information into an uplink broadband measurement signal and receiving a synthesized signal from a user equipment; and
acquiring information on a downlink channel state from the synthesized signal.

7. The method as claimed in claim 6, wherein the base station acquires uplink channel information by using a reception signal for the synthesized signal.

8. A base station apparatus for acquiring downlink channel information from a synthesized signal of an uplink broadband measurement signal and the downlink channel information, the base station apparatus grasping a downlink channel state by mapping the downlink channel information into the uplink broadband measurement signal, receiving the synthesized signal from a user equipment, and acquiring information on the downlink channel state from the synthesized signal.

9. The base station apparatus as claimed in claim 8, wherein the uplink broadband measurement signal is a sounding reference signal and the uplink channel information is a codeword of a precoding codebook.

# FIG.1

EP 2 472 979 A2

# FIG.2

```
210  CHANNEL ESTIMATOR → 220  CHANNEL INFORMATION DETERMINER → 260  DIFFERENTIAL MODULATOR

230  SRS GENERATOR → 240  SIGNAL SYNTHESIZER → 250  SIGNAL TRANSMITTER
```

# FIG.3

```
        ┌─────────────┐
        │    START    │
        └──────┬──────┘
               │
               ▼
   ┌─────────────────────────────┐
   │  ESTIMATE DOWNLINK CHANNEL AND │─── S310
   │  DETERMINE CHANNEL INFORMATION │
   └──────────────┬──────────────┘
                  │
                  ▼
   ┌─────────────────────────────┐
   │  SYNTHESIZE DOWNLINK CHANNEL   │─── S320
   │    INFORMATION AND SRS         │
   │  TO GENERATE SYNTHESIZED SIGNAL│
   └──────────────┬──────────────┘
                  │
                  ▼
   ┌─────────────────────────────┐
   │  TRANSMIT SYNTHESIZED SIGNAL   │─── S330
   │     TO CORRESPONDING BS        │
   └──────────────┬──────────────┘
                  │
                  ▼
        ┌─────────────┐
        │     END     │
        └─────────────┘
```

# FIG.4

*FIG.5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1020090079489 A